# EUROPÄISCHE PATENTSCHRIFT

(11) **EP 1 996 827 B1**
(45) Veröffentlichungstag und Bekanntmachung des Hinweises auf die Patenterteilung: **10.04.2013**
(21) Anmeldenummer: 07702449.5
(22) Anmeldetag: 15.02.2007
(51) Int. Cl.: F16D 48/04

(54) **DRUCKMITTELVERSORGUNG FÜR EINE KUPPLUNG UND EIN AUTOMATIK GETRIEBE**
PRESSURE MEDIUM SUPPLY UNIT FOR A CLUTCH AND AN AUTOMATIC TRANSMISSION
ALIMENTATION EN FLUIDE DE PRESSION DESTINÉE À UN EMBRAYAGE ET À UNE TRANSMISSION AUTOMATIQUE

(30) Priorität: 09.03.2006 DE 102006011376
(43) Veröffentlichungstag der Anmeldung: 03.12.2008
(73) Patentinhaber: Schaeffler Technologies AG & Co. KG, 91074 Herzogenaurach (DE)
(72) Erfinder: GRETHEL, Marco, 77830 Bühlertal (DE); HOMM, Manfred, 77815 Bühl-Neusatz (DE); MÜLLER, Eric, 67657 Kaiserslautern (DE); STAUDINGER, Martin, 76275 Ettlingen (DE); STEHR, Reinhard, 77815 Bühl (DE)
(86) Internationale Anmeldenummer: PCT/DE2007/000296
(87) Internationale Veröffentlichungsnummer: WO 2007/101421

(56) Entgegenhaltungen:
- EP-A- 1 216 871
- EP-A1- 0 537 050
- WO-A-2006/012995
- JP-A- 8 014 076
- US-A- 4 561 528

## Beschreibung

Die Erfindung betrifft eine Druckmittelversorgung für ein hydraulisches System mit einer Kupplung mit hohem Druck- und geringem Volumenstrombedarf und einem Automatikgetriebe mit niedrigem Druck- und hohem Volumenstrombedarf.

Es lassen sich zwei Versionen als Stand der Technik benennen. Eine Lösung ist, dass ein Motor die hydraulische Leistung für das Automatikgetriebe bereitstellt und ein Motor direkt die Hybridkupplung bedient.

Eine zweite Lösungsmöglichkeit besteht in einer rein hydraulischen Umsetzung. Ein leistungs-starker Elektromotor bedient eine große Pumpe für hohe Drücke. Dieses System kann sowohl hohe als auch niedrige Volumenströme bei sowohl hohem als auch niedrigem Druck bereitstellen, ist jedoch energetisch gesehen ungünstig, da das System nicht auf mehrere Betriebspunkte optimiert werden kann.

Der Erfindung liegt die Aufgabe zugrunde, dass ein Fahrzeug mit herkömmlichem Automatikgetriebe mit möglichst wenig Aufwand zu einem Hybridfahrzeug umgerüstet werden können soll. Dies wird gemäß der Erfindung dadurch erreicht, dass die Kupplung und das Automatikgetriebe von derselben Pumpen-Motor-Kombination versorgt werden und dass die Hybridkupplung über einen Druckverstärker versorgt wird, und dass zwischen der Pumpen-Motor-Kombination und dem Druckverstärker ein Proportionalventil angeordnet ist, und dass das Proportionalventil den Volumenstrom von der Pumpe zwischen dem Automatikgetribe und der Hybridkupplung verteilt. Derart soll ein separates hydraulisches Powerpack zur Verfügung gestellt werden, welches die Grundversorgung tes hydraulisches Powerpack zur Verfügung gestellt werden, welches die Grundversorgung des automatischen Getriebes zur Verfügung stellt, und welches die Kupplung zur Abtrennung der Verbrennungsmaschine bedienen kann.

EP0 537 050 und JP08014076 zeigen hydraulische system gemäβ dem oberbegriff des Anspruchs 1.

Die bereits im Stand der Technik beschriebene Lösung ist energetisch sehr ungünstig. Für das Ausrücken und insbesondere das Offenhalten der Hybridkupplung wird ein geringer Volumenstrom unter hohem Druck benötigt. Für die Versorgung des Automatikgetriebes ist jedoch ein hoher Volumenstrom bei niedrigem Druck erforderlich.

Durch diesen Widerspruch wird es notwendig, in der Motor- und Pumpenauslegung einen Kompromiss zu treffen.

Daher stellten sich im Rahmen dieser Aufgabe mehrere Konzepte heraus, welche es möglich machen, die vom Powerpack verbrauchte hydraulische Leistung zu verringern.

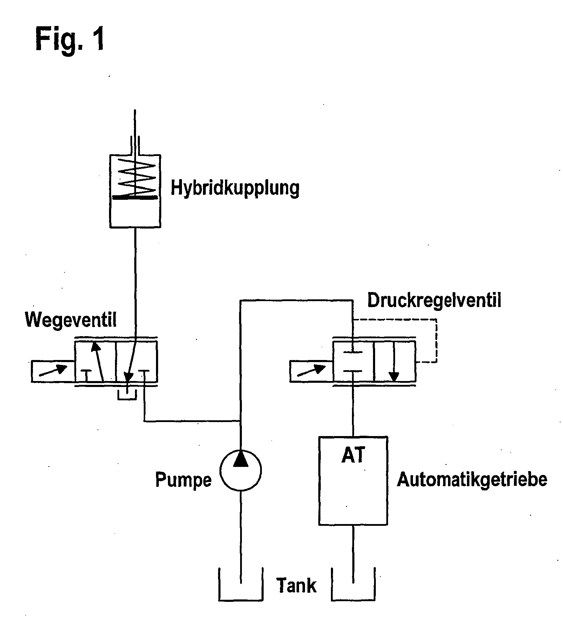

Nachfolgend wird die Erfindung anhand der Figuren 1 bis 6 näher erläutert: ein nicht erfindungsgemäβes hydraulisches System

Figur 1 umfass. Eine Pumpe versorgt über ein Druckregelventil das Automatikgetriebe, welches den Druck so einstellt, dass immer eine Versorgung der Hybridkupplung gewährleistet ist. Die Hybridkupplung wird dann mittels eines Wegeventils geregelt. Es müsste also der gesamte Volumenstrom der Pumpe auf den Betriebsdruck der Hybridkupplung gebracht werden, obwohl diese lediglich einen statischen Druck bräuchte, um die Position zu halten.

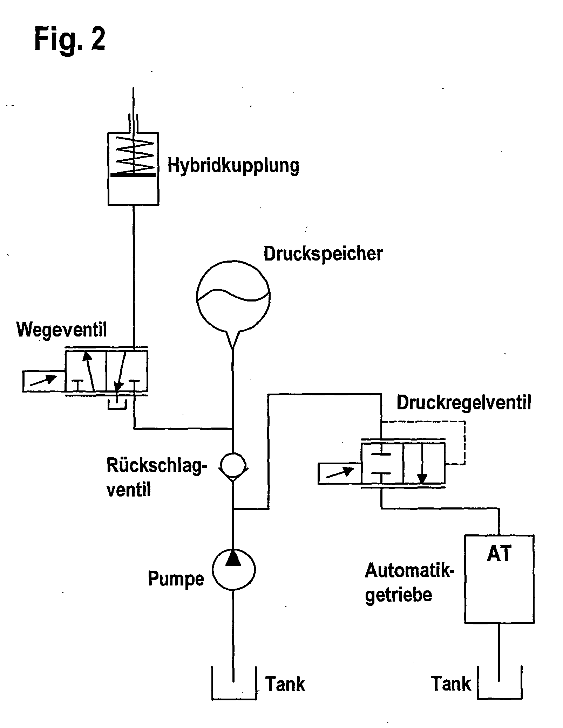

Gemäß Figur 2 soll ein Druckspeicher verwendet werden. Das bewirkt, dass die Pumpe nur kurzzeitig hohen Druck fördern muss, und, während der Speicher gefüllt ist, die Hybridkupplung von diesem versorgt wird. Bis der Speicher wieder leer ist, muss die Pumpe also nur gegen ein geringes Druckniveau arbeiten. Dies bedeutet jedoch, dass zusätzlich zu dem Druckregelventil und dem Wegeventil, welche bereits bei Figur 1 verwendet werden, noch ein Rückschlagventil hinzukommt. Entweder baut das Druckregelventil einen Druck auf, welcher den Speicher befüllt und die Hybridkupplung bedient, oder das Druckregelventil wird vollständig geöffnet, sodass der Volumenstrom verlustfrei an das Automatikgetriebe weitergeleitet wird. In letzterem Fall wird der Hochdruckteil des Systems durch das Rückschlagventil verschlossen, sodass der Speicherdruck gehalten wird.

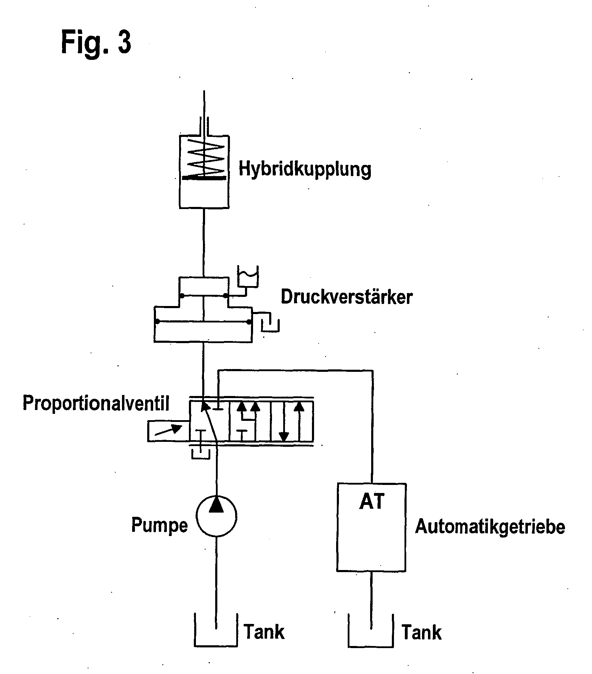

In der Ausführungsform nach Figur 3 wird die Hybridkupplung mittels eines Druckverstärkers geöffnet. Ein Proportionalventil verteilt den Volumenstrom von der Pumpe zwischen Automatikgetriebe und Hybridkupplung. Das Flächenverhältnis des Druckverstärkers ist so ausgelegt, dass der durchschnittlich benötigte Druck in ähnlichem Niveau liegt, in dem sich auch der Bedarf des Automatikgetriebes befindet. So können Motor und Pumpe auf einen idealen Betriebspunkt ausgelegt werden.

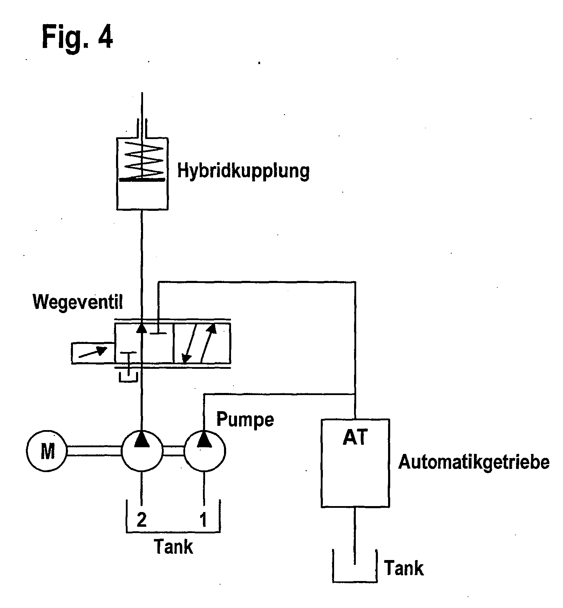

Die Version nach Figur 4 bedient sich einer 2-flutigen Pumpe. Die erste Flut ist so ausgelegt, dass sie den Grundbedarf des Automatikgetriebes decken kann. Die zweite Flut soll gegen den hohen Druck der Hybridkupplung fördern, solange diese einen hohen Volumenstrom benötigt. Soll sich die Kupplung nicht bewegen, so wird mittels eines Wegeventils der Volumenstrom der zweiten Flut in den Kreislauf der ersten Flut umgeleitet.

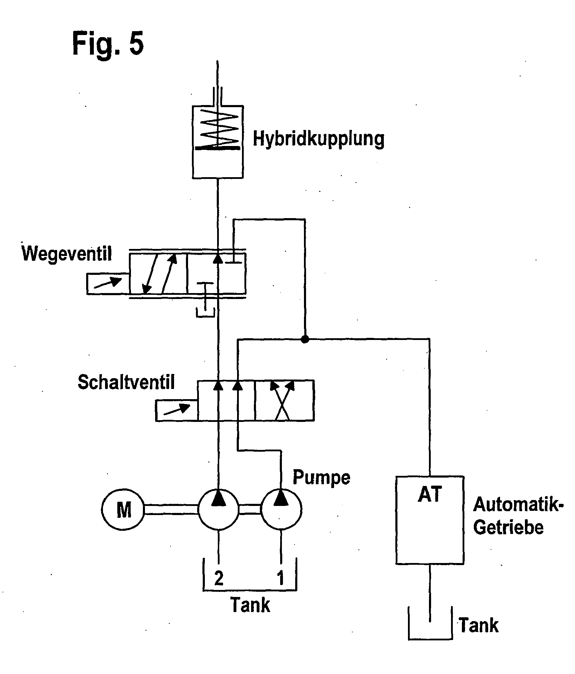

Die Version nach Figur 5 bedient sich ebenfalls einer 2-flutigen Pumpe, jedoch ist hier das Größenverhältnis der Fluten anders ausgelegt. Da während des Öffnens der Hybridkupplung kein Volumenstrom für das Automatikgetriebe gebraucht wird, werden die Fluten so hin und her geschaltet, dass die größere Flut jeweils den Teil bedient, welcher einen größeren Volumenstrombedarf hat. So kann im Vergleich zu Version nach Figur 4 vermieden werden, dass die größere Flut den Druck einer geöffneten Hybridkupplung dauerhaft halten muss.

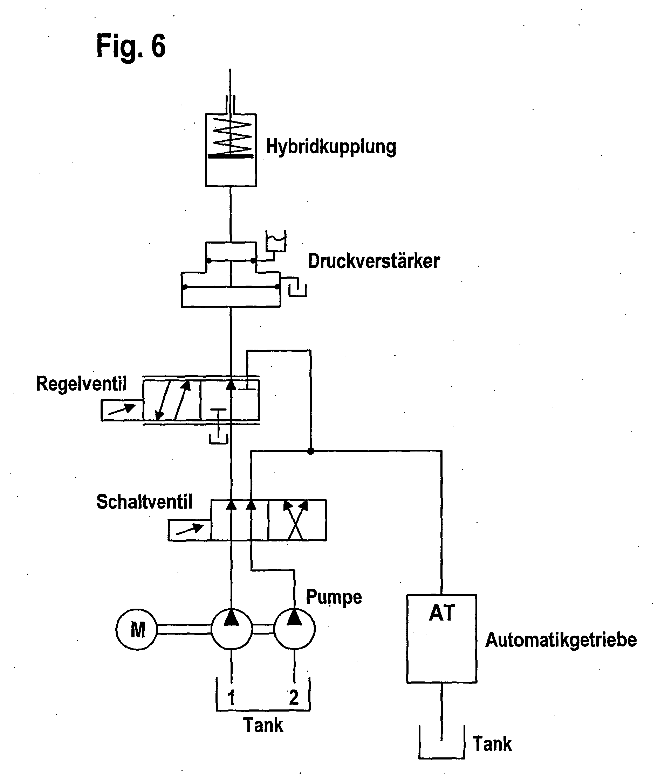

Bei der Version nach Figur 6 sollen, um die Differenzen zwischen den verschiedenen Anforderungen noch weiter zu verringern, nun die Vorteile von Konzept nach Figur 3 und Konzept nach Figur 5 kombiniert werden. Wahlweise, hier aber nicht näher erläutert, kann auch das Konzept nach Figur 4 mit Konzept nach Figur 3 kombiniert werden. Es handelt sich hier also um ein Konzept, welches mittels einer zweiflutigen Pumpe einen Druckverstärker und das Automatikgetriebe bedient. Auch hier wird nun die größere Flut verwendet, um den jeweils höheren Volumenstrombedarf abzudecken. Verdeutlicht wird dies in der Skizze. Eine entsprechende Auslegung des Druckverstärkungsverhältnisses gewährleistet, dass die sehr unterschiedlichen Anforderungen von Hybridkupplung und Automatikgetriebe nahezu vollständig aneinander angeglichen werden können.

## Patentansprüche

1. Hydraulisches System mit einer Druckmittelversorgung, mit einer Hybridkupplung zum Trennen und Verbinden von Verbrennungsmaschine und Antriebsstrang eines Hybridfahrzeugs mit hohem Druck- und geringem Volumenstrombedarf und einem Automatikgetriebe mit niedrigem Druck- und hohem Volumenstrombedarf wobei, die Hybridkupplung und das Automatikgetriebe von derselben Pumpen-Motor-Kombination versorgt werden,
**dadurch gekennzeichnet, dass** die Hybridkupplung über einen Druckverstärker versorgt wird und
dass zwischen der Pumpen-Motor-Kombination und dem Druckverstärker ein Proportionalventil angeordnet ist, und dass das Proportional ventil den Volumenstrom von der Pumpe zwischen
dem Automatiegeticebe und der Hybridkupplung verteil,

## Claims

1. Hydraulic system having a pressure medium supply means, having a hybrid clutch for disconnecting and connecting the internal combustion engine and the drive train of a hybrid vehicle with a high pressure requirement and a low volumetric flow requirement and an automatic transmission with a low pressure requirement and a high volumetric flow requirement, the hybrid clutch and the automatic transmission being supplied by the same pump/motor combination, **characterized in that** the hybrid clutch is supplied via a pressure intensifier, and **in that** a proportional valve is arranged between the pump/motor combination and the pressure intensifier, and **in that** the proportional valve distributes the volumetric flow from the pump between the automatic transmission and the hybrid clutch.

## Revendications

1. Système hydraulique comprenant une alimentation en fluide sous pression, comprenant un embrayage hybride pour séparer et connecter un moteur à combustion interne et une chaîne cinématique d'un véhicule hybride ayant un besoin élevé en pression et un faible besoin en débit volumique et une transmission automatique ayant un faible besoin en pression et un besoin élevé en débit volumique, l'embrayage hybride et la transmission automatique étant alimentés par la même combinaison de pompe et moteur,
**caractérisé en ce que**
l'embrayage hybride est alimenté par le biais d'un amplificateur de pression et
**en ce qu'**entre la combinaison pompe-moteur et l'amplificateur de pression est disposée une soupape proportionnelle et
**en ce que** la soupape proportionnelle répartit le débit volumique de la pompe entre la transmission automatique et l'embrayage hybride.
